Europäisches Patentamt

European Patent Office

Office européen des brevets

Publication number: **0 275 042**

**A2**

# EUROPEAN PATENT APPLICATION

Application number: 88100172.1

Int. Cl.4 **G01K 17/00**

Date of filing: **08.01.88**

Priority: **08.01.87 US 1302**

Date of publication of application:
**20.07.88 Bulletin 88/29**

Designated Contracting States:
**BE DE FR GB IT NL**

Applicant: **WESTINGHOUSE ELECTRIC CORPORATION**
**Westinghouse Building Gateway Center**
**Pittsburgh Pennsylvania 15222(US)**

Inventor: **Fauske, Hans Kare**
**17W-063 87th Street**
**Hinsdale, IL 60521(US)**

Representative: **Patentanwälte Dipl.-Ing. R.**
**Holzer Dipl.-Ing. (FH) W. Gallo**
**Philippine-Welser-Strasse 14**
**D-8900 Augsburg(DE)**

## Apparatus for measuring exothermic reaction energy release.

A stable isothermal calorimeter wherein the material under study (12) is contained in a thermally conductive reactor vessel (10) which is surrounded by a heat transfer fluid in an isothermal boiling jacket (14). The material is maintained at the boiling point of the heat transfer fluid which is in turn controlled by a means (20) for controlling the pressure of the fluid's vapor space. The amount of heat transfer fluid condensed in a condenser (44) in communication with the isothermal boiling jacket (14) is measured by liquid level sensor (46) to determine the caloric output of the exothermic reaction.

EP 0 275 042 A2

# APPARATUS FOR MEASURING EXOTHERMIC REACTION ENERGY RELEASE

The present invention relates generally to the field of heat measuring apparatus and more particularly to an improved isothermal boiling calorimeter.

The conventional calorimeter is a well known device for measuring the heats of various physical and chemical processes. Since the heat released by an exothermic reaction may vary dramatically with the temperature at which the reaction takes place, it is necessary that a precise temperature be maintained. Prior isothermal calorimeters have involved elaborate and expensive measures to prevent heat exchange between the reactor vessel and the surroundings and typically have been inadequate to handle the high energy release rates encountered in chemical hazard research.

An object of the invention is to provide a calorimetric apparatus that is capable of measuring high energy release rates, is easily calibrated, and does not require extreme measures to prevent reactor vessel heat loss.

A thermally conductive reactor is disposed in an isothermal boiling jacket containing a heat transfer fluid. An exothermic reaction is maintained at the boiling temperature of the heat transfer fluid and the rate of energy release is determined by measuring the rate at which the heat transfer fluid is vaporized.

The calorimeter of the invention is capable of measuring high energy release rates, is easily calibrated, and does not require extensive provisions for limiting heat loss.

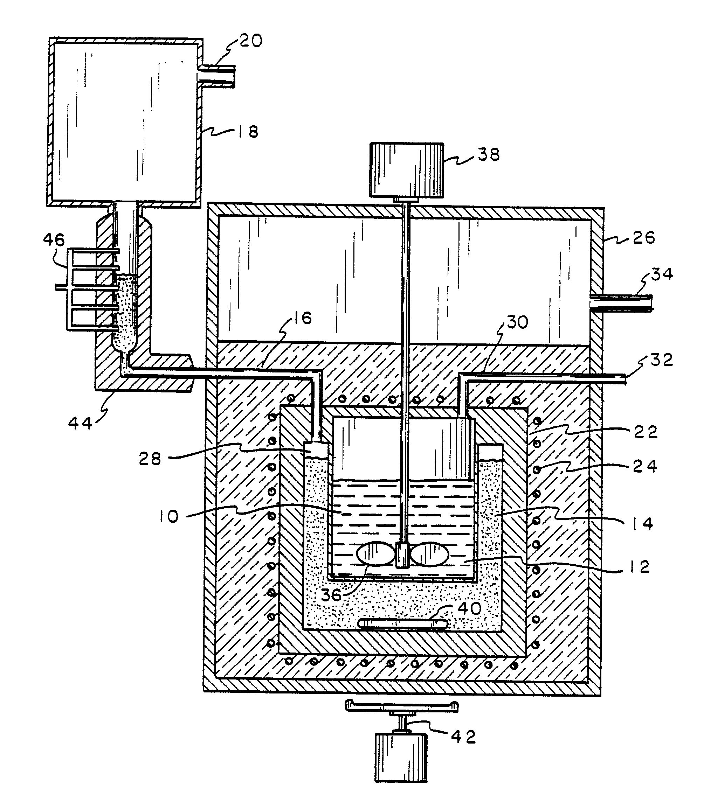

The invention will become more readily apparent from the following description of the preferred embodiment thereof, shown by way of example only in the accompanying drawing wherein a vertical cross-section schematic view of a preferred embodiment of the present invention is shown.

With reference now to the figure there is illustrated in schematic vertical cross-section an isothermic boiling calorimeter in accordance with the principles of the present invention. A reactor vessel 10 containing a sample 12 to be studied is disposed in an isothermal boiling jacket 14 containing a heat transfer fluid having a boiling point which is a known function of pressure. The isothermal boiling jacket 14 is in communication via tube 16 with a pressure vessel 18 whereby the pressure of the heat transfer fluid vapor space is controlled through an exhaust supply port 20. The isothermal boiling jacket 14 and reactor vessel 10 are surrounded by a layer of insulation 22. A guard heater 24 is provided in order that heat losses from the isothermal boiling jacket 14 are kept to a minimum. The reactor vessel assembly is disposed in a high pressure containment vessel 26. The reactor vessel 10 is in communication via tube 30 with a fill bypass pressure port 32 externally of the containment vessel 26 which permits remote loading and feeding. The containment vessel 26 is also provided with a pressure supply exhaust port 34.

A mechanical mixer 36 driven by motor 38 may be provided to assure a complete reaction of the sample 12 under study. The heat transfer fluid in the isothermal boiling jacket 14 is maintained at a uniform temperature by means of a magnetic stirring bar 40 which is driven by a magnetic stirrer assembly 42 which is known in the art.

As heat is released from an exothermic reaction in the reactor vessel 10 it is transferred to the fluid in the isothermal boiling jacket 14 causing a portion of the fluid to vaporize. The vapor passes through tube 16 to a condenser 44 which is provided with a liquid level sensor 46. The condenser 44 may be any type of high heat capacity arrangement compatible with the amount of heat to be released by the reaction in the reactor vessel 10. Illustrative examples would include a block of high heat capacity metal such as copper or a copper tube surrounded by an ice bath. Vaporized heat transfer fluid condenses to liquid in the condenser 44 and is measured by the liquid level sensor 46. The rate of liquid accumulation in the condenser 44 is directly proportional to the rate of energy release by the reaction in the reactor vessel 10. The volume of heat transfer fluid relative to the volume of reactants will vary with the reaction under study but will generally be at least 2:1 to ensure extraction of substantially all the energy generated by the reaction.

The sample 12 under study is thus maintained at the boiling point of the heat transfer fluid in the isothermal boiling jacket 14 thereby permitting study of the reaction under isothermal conditions. The boiling point of the heat transfer fluid is related to the pressure of its vapor space which is controlled by applying or releasing pressure to the pressure vessel 18 through exhaust supply port 20. Thus by regulating the back pressure at the condenser 44 the reaction in the reactor vessel 10 may be studied under various controlled isothermal conditions.

The apparatus of the present invention permits the study of exothermic chemical reactions under stable temperature conditions which may be easily varied by adjusting the pressure of the heat transfer fluid vapor space. In actual practice it has been found that the above-described arrangement can maintain proper sample temperature for reactions with very high energy release rates within tolerances which are much closer than those achievable with conventional calorimeters.

From the preceeding description it will be seen that the applicant has provided a new and improved apparatus for studying energetic reactions under isothermal conditions. Since certain changes in the above-described construction will occur to those skilled in the art without departure from the scope of the invention it is intended that all material set forth in the description or shown in the appended drawing shall be interpreted as illustrative and not in a limiting sense. Having described what is new and novel and desired to secure by Letters Patent.

## Claims

1. Apparatus for measuring the energy release by an exothermic reaction having a reactor vessel (10) for containing a quantity of reactants (12) to be studied and an isothermal boiling jacket (14) disposed about and in a heat transfer relation to said reactor vessel (10) and containing a quantity of a heat transfer fluid the measuring apparatus characterized in that the heat transfer fluid has a boiling point which is a known function of pressure; a condenser (44) is in communication with said isothermal boiling jacket (14); and means (46) is coupled to said condenser (44) for measuring the amount of heat transfer fluid within said condenser (44); whereby heat released by the reaction (12) in said reactor vessel (10) is transferred to said heat transfer fluid causing a portion thereof to vaporize and pass to said condenser (44) and condense to liquid form at a rate proportional to the rate that heat is released by the reaction.

2. Apparatus as recited in Claim 1 further characterized in that a pressure vessel (18) is in communication with said condenser (44) opposite said isothermal boiling jacket (14); and means (20) is provided for adjusting the pressure in said pressure vessel (18) to thereby adjust the back pressure at said condenser (44); whereby the reaction may be studies under variable controlled isothermal conditions.

3. Apparatus as recited in Claim 1 further characterized in that a first layer of thermal insulation (22) surrounds said isothermal boiling jacket (14) and reactor vessel (10); and a guard heater (24) is disposed externally of said first layer of insulation (22) to minimize heat loss from said isothermal boiling jacket (14).

4. Apparatus as recited in Claim 1 further characterized in that a containment vessel (26) enclosing said reactor vessel (10) and isothermal boiling jacket (14), said condenser (44) being disposed externally of said containment vessel (26).

5. Apparatus as recited in Claim 4 further characterized in that a pressure supply exhaust port (34) is in communication with said containment vessel (26) whereby the internal pressure thereof may be adjusted.

6. Apparatus as recited in Claim 1 further characterized in that means (36) are provided for agitating the reactants (12) in said reactor vessel (10) to thereby assure substantial completion of the reaction under study.

7. Apparatus as recited in Claim 1 characterized by the ratio of the volume of heat transfer fluid in said isothermal boiling jacket (14) to the volume of reactants (12) in said reactor vessel (10) is at least two to one.

0 275 042